Europäisches Patentamt

European Patent Office

Office européen des brevets

(19)

(11) Veröffentlichungsnummer: **0 191 928**
A2

## (12) EUROPÄISCHE PATENTANMELDUNG

(21) Anmeldenummer: 85115782.6

(22) Anmeldetag: 11.12.85

(51) Int. Cl.⁴: **C 09 D 5/24**
C 08 K 3/04, C 08 L 23/04

(30) Priorität: 22.12.84 DE 3447250

(43) Veröffentlichungstag der Anmeldung:
27.08.86 Patentblatt 86/35

(84) Benannte Vertragsstaaten:
BE DE FR GB IT NL SE

(71) Anmelder: BAYER AG
Konzernverwaltung RP Patentabteilung
D-5090 Leverkusen 1 Bayerwerk(DE)

(72) Erfinder: Alberts, Heinrich, Dr.
Schulstrasse 1a
D-5068 Odenthal(DE)

(72) Erfinder: Burgdörfer, Hans-Heribert, Dr.
Goffineweg 49
D-5000 Köln 80(DE)

(54) Kunstharzpulver für Beschichtungen mit verringertem Oberflächenwiderstand.

(57) Die Erfindung betrifft Kunstharzpulver für Beschichtungsmittel und ihre Anwendung zur Herstellung von Beschichtungen mit verringertem Oberflächenwiderstand.

EP 0 191 928 A2

Croydon Printing Company Ltd

BAYER AKTIENGESELLSCHAFT    5090 Leverkusen, Bayerwerk
Konzernverwaltung RP
Patentabteilung              Eck/Kü/bo/c

Kunstharzpulver für Beschichtungen mit verringertem
Oberflächenwiderstand

Die Erfindung betrifft Kunstharzpulver für Beschichtungsmittel und ihre Anwendung zur Herstellung von Beschichtungen mit verringertem Oberflächenwiderstand.

Die Verwendung von Polymerpulvern bestimmter Partikelgröße für die Beschichtung von Metall, Glas, Keramik,
Holz oder anderen Werkstoffen ist bekannt. Üblicherweise werden für diese Zwecke Polyethylen, PVC, Polyamide, Polyester, verseifte Ethylen-Vinylacetatcopolymere, Polyurethane oder Epoxidharze eingesetzt. Allen
Produkten gemeinsam ist die Neigung zu hoher elektrostatischer Aufladung sowohl im pulverförmigen Zustand
als auch als Beschichtungsfläche.

Zur Verringerung des Oberflächenwiderstandes ist die
Verwendung von Antistatika, die Zumischung leitfähiger Additive oder die Oberflächenbehandlung üblich
(z.B. die galvanische Metallisierung, vergl.
A. Bledzko und D. Stankowska in Kunststoffe 74
(1984), S. 2 ff). Die Verwendung von leitfähigem Ruß

Le A 23 302 -EP

als Polymeradditiv ist bekannt und wird z.B. in Kautschuk-Gummi-Kunststoffe 37 (1984) Nr. 3, S. 198 ff oder in der Firmenschrift Carbon Black XE-2 ® der Phillips Petroleum Co. (12/1981) beschrieben.

Üblicherweise wird nach den bekannten Verfahren ein leitfähiges Additiv (z.B. als Pulver, Faser, Kugel, Plättchen, etc.) in die Polymerlösung oder -schmelze eingearbeitet.

Bei der Verwendung feinteiliger Additive, z.B. Ruß wird eine Verringerung des Oberflächenwiderstand ab einer gewissen Mindestkonzentration erreicht. Z.B. beträgt der elektrische Oberflächenwiderstand von Polyethylen (z.B. Marlex 47100 ® nach der obigen Firmenschrift von Phillips Petroleum) mehr als $10^{16}$ ohm cm. Bei Zumischung von 10 % Ruß XE 2 ® sinkt der Oberflächenwiderstand auf 40 ohm cm. So modifizierte Polymere können für die Herstellung von leitfähigen Flächengebilden beispielsweise durch Schmelzextrusion verwendet werden.

Weiterhin können die oben aufgeführten Polymermischungen mit leitfähigen Additiven durch Mahlung in Pulver überführt werden und diese Pulver für Beschichtungszwecke eingesetzt werden. Aufgrund der in Masse erfolgten Einarbeitung der Additive sind 1. die benötigten Aufwandmengen, um eine Erniedrigung des Oberflächenwiderstandes zu erreichen, beträchtlich und 2. werden durch die hohen Additivmengen die mechanischen Festigkeitswerte der Beschichtung (z.B. Reißfestigkeit) beträchtlich verschlechtert.

Le A 23 302

- 3 -  0191928

Andererseits lehrt die DE-PS 2 255 033 die Einarbeitung von Pigmenten in Kunstharzpulver durch Abmischen in z.B. Reibmischern. Der Mischvorgang wird nach ausreichendem Erwärmen der Kornoberflächen des Kunstharzpulvers so lange fortgeführt, bis das feinteilige Additivmaterial in das Innere der erwärmten Oberflächenbereiche der Kunstharzkörner eingedrungen ist. Geeignete Mischer werden in US 3 229 002 sowie US 3 472 491 beschrieben. Im allgemeinen werden als Zusatzstoffe Pigmente verwendet, um den Harzmassen die gewünschte Farbe zu verleihen.

Es wurde nun gefunden, daß bei der Herstellung von Mischungen aus Kunstharzpulvern und feinteiligen leitfähigen Additiven, vorzugsweise leitfähigem Ruß, in einem Intensivmischer, unter Fortsetzung des Mischvorganges bis in den Bereich der thermoplastischen Erweichung des Polymerpulvers, eine Verringerung des Oberflächenwiderstandes der aus diesen Polymerpulvern hergestellten Beschichtungen schon mit 0,01 bis 1,5 Gew.-%, vorzugsweise 0,1 - 0,5 Gew.-%, leitfähigem Additiv, vorzugsweise leitfähigem Ruß, erreicht wird.

Gegenstand der Erfindung sind somit Kunstharzpulver, enthaltend 0,01 bis 1,5 Gew.-%, vorzugsweise 0,1 - 0,5 Gew.-%, leitfähiger Additive, vorzugsweise leitfähigem Ruß, dadurch gekennzeichnet, daß die Einarbeitung der leitfähigen Additive in das Kunstharzpulver in einem Intensivmischer unter Fortsetzung des Mischvorganges bei erhöhter Temperatur bis in den Bereich der thermoplastischen Erweichung der Oberfläche des Kunststoffpulvers erfolgt

Le A 23 302

und das Additiv an das Polymer oberflächlich angebunden wird und mit den so modifizierten Kunstharzpulvern hergestellte Beschichtungen.

In einer bevorzugten Ausführungsform werden thermoplastisch erweichende Kunststoffpulver mit 0,1 bis 0,5 Gew.-% eines leitfähigen Russes versetzt und das Additiv durch den Mischvorgang bei erhöhter Temperatur an das Kunstharzpulver angebunden.

In einer besonders bevorzugten Ausführungsform werden für die Herstellung von Oberflächenbeschichtungen mit vermindertem Oberflächenwiderstand Kunststoffpulver auf Basis verseifter Ethylen-Vinylacetatcopolymerer mit 0,01 bis 1,5 Gew.-%, vorzugsweise 0,1 bis 0,5 Gew.-% eines leitfähigen Russes so lange bei erhöhter Temperatur vermischt, daß über die oberflächlich erweichten Polymerpulverpartikel eine Anbindung des Rußpigmentes an das verseifte Ethylen-Vinylacetatcopolymer erfolgt.

Die Korngröße der für den Mischvorgang eingesetzten Polymerpulver ist in weiten Grenzen variabel. In Abhängigkeit vom Auftragsverfahren werden vorzugsweise Pulver im Korngrenzenbereich 0-350 μ verwendet. Für Pulver, die nach Wirbelsinterverfahren aufgetragen werden sollen, ist die bevorzugte Korngrößenverteilung im Bereich von 80-250 μ. Pulver, die nach üblicher EPS-Arbeitsweise aufgetragen werden, sollten kleiner als 150 μ, vorzugsweise < 80 μ sein.

Le A 23 302

Als Kunststoffpulver seien beispielsweise erwähnt Pulver aus Polyolefinen wie Polyethylenhomo- und copolymerisaten, die nach den verschiedenen Verfahren der Ethylenhomo- und copolymerisation erhalten werden, Polypropylenhomo- oder Copolymerisaten. Besonders günstige Ergebnisse werden mit Ethylencopolymeren erzielt, die geringe Anteile an Vinylacetat, (Meth)-Acrylsäure oder/und (Meth)-Acrylsäureestern oder Maleinsäureanhydrid enthalten. Neben den Polyolefinpulvern können Pulver aus Vinylchloridhomo- und copolymerisaten im Sinne der Erfindung verwendet werden.

Die PVC-Pulver können Weichmacher auf Basis nieder- oder hochmolekularer Verbindungen und zusätzlicher Additive enthalten. Weiterhin sind im Sinne der Erfindung auch Polyamidpulver, vorzugsweise von Polyamiden, die $C_8$- bis $C_{14}$-Alkylketten in der Hauptkette enthalten, verwendbar. Die Polyamide können zusätzliche Zumischkomponenten - z.B. elastifizierende Zusätze - enthalten.

Thermoplastisch erweichende Polyester und Celluloseester sind ebenfalls erfindungsgemäß verwendbar, sowie die bekannten Pulverlacke auf Epoxid- und Polyurethanharzbasis.

Bevorzugte Beschichtungsmaterialien sind z.B. verseifte Ethylen-Vinylacetatcopolymere (z.B. DE-PS 1 669 151). Die verseiften Ethylenvinylacetatcopolymeren können für sich oder im Gemisch mit Vernetzern wie polyfunktionellen Isocyanaten (z.B. DE-PS 2 064 098 oder DE-PS 2 709 451) verwendet werden. Weiter-

Le A 23 302

hin sind auch Carboxylgruppen enthaltende verseifte Ethylenvinylacetatcopolymere für die erfindungsgemäße Anwendung geeignet. Der Vinylacetatgehalt der für die Verseifung oder Teilverseifung eingesetzten Ethylen-Vinylacetatcopolymeren ist beliebig, d. h. alle Copolymerisate mit Vinylacetatgehalten von 0,5-99 Gew.-% sind einzusetzen. Bevorzugt sind Copolymere mit 25-50 Gew.-% Vinylacetatgehalt. Der Schmelzindex gemessen bei 190°C und 2,16 kp Belastung sollte vorzugsweise > 25 $\sqrt{g}/10$ Min.$\sqrt{}$ sein.

Erfindungsgemäß werden feinteilige leitfähige Additive, beispielsweise Metallpulver, leitfähige Pigmente, vorzugsweise leitfähiger Ruß verwendet, wie er beispielsweise in der Firmenschrift Carbon Black XE-2 ®der Phillips Petroleum Co. (12/1981) oder in Kautschuk + Gummi-Kunststoffe 37 (1984) Nr. 3, S. 198 ff beschrieben wird.

Zusätzlich können die Abmischungen Verlaufsmittel, beispielsweise Acrylsäureesterpolymerisate sowie Haftvermittler, Pigmente und Hilfsstoffe enthalten.

Zur Herstellung der erfindungsgemäßen Pulvermischungen wird ein Intensivmischer, dessen Mischleistung bei einer Umfangsgeschwindigkeit des Mischwerkzeuges von etwa 40 m/sec. mindestens 0,8 kW/kg Mischgut beträgt, mit den zu mischenden Komponenten beschickt. Gegebenenfalls kann zunächst mit verminderter Drehzahl eine Vormischung hergestellt werden. Anschließend kann dann

Le A 23 302

bei einer Umfangsgeschwindigkeit des Mischwerkzeuges von etwa 40 m/sec., entsprechend einer spezifischen Mischleistung von etwa 0,8-1,5 kW/kg Mischgut unter Temperaturerhöhung bis zum Erreichen der gewünschten maximalen Mischtemperatur die Einarbeitung der leitfähigen Additive durchgeführt werden.

Die erfindungsgemäß erhaltenen Beschichtungspulver ergeben Beschichtungen, deren Oberflächenwiderstand $< 10^{11}$ ohm·cm, vorzugsweise $< 10^6$ ohm·cm ist.

Die mit den erfindungsgemäßen Produkten erhaltenen Beschichtungen werden vor allem da eingesetzt, wo elektrostatische Aufladung vermieden werden soll, beispielsweise im Bergwerksbereich zum Korrosionsschutz in ex-gefährdeten Anlagen, zur Beschichtung elektronischer Bauteile, von Gehäusen für hochspannungsempfindliche Elektronik oder wo eine Hochfrequenzabschirmung erwünscht ist.

Le A 23 302

Beispiele

Allgemeine Arbeitsvorschrift:

In einem Intensivmischer - für diese Versuchsreihe
wurde ein Henschel-Fluidmischer FM 10 eingesetzt -
werden die in der Tabelle angegebenen Bestandteile
eingefüllt. Die Mischung wird nach 30 sec. Vormischzeit mit einer Mischleistung von etwa 1,2 kW/kg
Mischgut innerhalb der angegebenen Zeit bis zum Erreichen der Spitzentemperatur durchgeführt. Anschließend wird das Mischgut abgekühlt, vorzugsweise
in einer Kühlmischerstufe, um ein Agglomerieren
zu vermeiden.

Die für die Abmischungen in den folgenden Beispielen
eingesetzten Materialien sind:

Polymerpulver 1:    verseiftes Ethylen-Vinylacetatcopolymer, das etwa 16-17 Gew.-%
                    Vinylalkoholeinheiten enthält
                    und einen Schmelzindex (gemessen
                    bei 150°C und 2,16 kp Belastung)
                    von 12,2 g/10 Min. aufweist.

Polymerpulver 2:    Polyvinylchlorid
Polymerpulver 3:    Polyethylen
Polymerpulver 4:    Polyamid

Le A 23 302

Tabelle 1

| | Polymerpulver | | | | leit-fähiger Ruß | Misch-zeit sec. | Spitzen-tempera-tur | Oberflächen-widerstand ① ② ohm cm |
|---|---|---|---|---|---|---|---|---|
| Beispiel Nr. | 1 | 2 | 3 | 4 | | | | |
| 1 | 1500 g | – | – | – | 3,0 g | 570 | 90°C | $2,4 \times 10^6$ |
| 2 | 1500 g | – | – | – | 4,5 g | 600 | 90°C | $1,1 \times 10^5$ |
| 3 | 1500 g | – | – | – | 6,0 g | 615 | 90°C | $4,2 \times 10^4$ |
| 4 | 1500 g | – | – | – | 7,5 g | 675 | 92°C | $1,3 \times 10^4$ |
| 5 | 1500 g | – | – | – | 7,5 g | 285 | 90°C | $1,0 \times 10^4$ |
| 6 | – | 1500 | – | – | 4,5 g | 320 | 90°C | $2,5 \times 10^6$ |
| 7 | – | – | 1500 | – | 4,5 g | 270 | 88°C | $3,2 \times 10^5$ |
| 8 | – | – | – | 1500 | 4,5 g | 645 | 145°C | $9,7 \times 10^4$ |

① Die Messung des Oberflächenwiderstandes $R_{OA}$ erfolgte nach DIN 53 482/ VDE 0303 Teil 3. Der Probenzustand nach Vorbehandlung von 1 d/23°C/ 50 % relativer Feuchte und Prüfklima 23°C/50 % relativer Feuchte entsprach DIN 50 005. Als Elektrode wurde eine Schneidenelektrode bei einer Meßspannung von 10 V verwendet.

② Die Messung des Oberflächenwiderstandes $R_{OA}$ erfolgte an Oberflächenbeschichtungen, die durch Wirbelsinterbeschichtung von auf 300°C erhitzten Metallplatten erhalten wurden. Die Tauchzeit der Metallplatten (10x20x0,4 cm) betrug 3 sec, die Dicke der Beschichtungsfolie ca. 400 μ.

Le A 23 302

- 9 -

0191928

Le A 23 302

Tabelle 2

| | Polymer-pulver | leitfähiger Ruß | Bayferrox[R] 303 T | OP-Wachs[R] (Hoechst) | Acrylat-Verlaufsmittel Modaflow[R] | Oberflächen-widerstand ① ohm | ② cm |
|---|---|---|---|---|---|---|---|
| Beispiel Nr. 1 | | | | | | | |
| 9 | 1500 g | 15 g | 7,5 g | - | - | $3,3 \times 10^3$ | |
| 10 | 1280 g | 75 g | - | 45 g | - | $7,5 \times 10^3$ | |
| 11 | 1500 g | 30 g | - | - | 5 g | $5,7 \times 10^3$ | |

① Die Messung des Oberflächenwiderstandes $R_{OA}$ erfolgte nach DIN 53 482/VDE 0303 Teil 3. Der Probenzustand nach Vorbehandlung von 1 d/23°C/ 50 % relativer Feuchte und Prüfklima 23°C/50% relativer Feuchte entsprach DIN 50 005. Als Elektrode wurde eine Schneidenelektrode bei einer Meßspannung von 10 V verwendet.

② Die Messung des Oberflächenwiderstandes $R_{OA}$ erfolgte an Oberflächenbeschichtungen, die durch Wirbelsinterbeschichtung von auf 300°C erhitzten Metallplatten erhalten wurden. Die Tauchzeit der Metallplatten (10x20x0,4 cm) betrug 3 sec, die Dicke der Beschichtungsfolie ca. 400 µ.

0191928

Patentansprüche

1. Kunstharzpulver, enthaltend 0,01 bis 1,5 Gew.-% leitfähiger Additive, dadurch gekennzeichnet, daß die Einarbeitung der leitfähigen Additive in das Kunstharzpulver in einem Intensivmischer unter Fortsetzung des Mischvorganges bei erhöhter Temperatur bis in den Bereich der thermoplastischen Erweichung der Oberfläche des Kunststoffpulvers erfolgt und das Additiv an das Polymer oberflächlich angebunden wird.

2. Kunstharzpulver nach Anspruch 1, enthaltend 0,01- 0,5 Gew.-% leitfähige Additive, dadurch gekennzeichnet, daß die Einarbeitung der leitfähigen Additive in das Kunstharzpulver in einem Intensivmischer unter Fortsetzung des Mischvorganges bei erhöhter Temperatur bis in den Bereich der thermoplastischen Erweichung der Oberfläche des Kunststoffpulvers erfolgt und das Additiv an das Polymer oberflächlich angebunden wird.

3. Kunstharzpulver nach Anspruch 1, dadurch gekennzeichnet, daß als leitfähiges Additiv leitfähiger Ruß verwendet wird.

4. Kunstharzpulver nach Anspruch 1, dadurch gekennzeichnet, daß als Kunstharzpulver ein verseiftes Ethylen-Vinylacetatcopolymerisat verwendet wird.

Le A 23 302

5. Kunstharzpulver nach Anspruch 4, dadurch gekennzeichnet, daß man 0,01 bis 1,5 Gew.-% leitfähigen Ruß als leitfähiges Additiv verwendet.

6. Kunstharzpulver nach Ansprüchen 4 und 5, dadurch gekennzeichnet, daß 0,1 bis 0,5 Gew.-% leitfähigen Ruß eingesetzt werden.

7. Beschichtungen enthaltend Kunstharzpulver entsprechend Ansprüchen 1 bis 6, wobei die Beschichtungen einen Oberflächenwiderstand $R_{OA}$ nach DIN 53 482/ VDE 0303, Teil 3 von maximal $10^{11}$ ohm·cm, vorzugsweise $< 10^6$ ohm·cm aufweisen.

<u>Le A 23 302</u>